# FASCICULE DE BREVET EUROPEEN

(11) **EP 1 349 635 B1**
(45) Date de publication et mention de la délivrance du brevet: **25.08.2004**
(21) Numéro de dépôt: 01986935.3
(22) Date de dépôt: 24.12.2001
(51) Int. Cl.: B01D 36/04, B01D 29/11

(54) **RESERVOIR D'EGOUTTAGE D'UN MELANGE GRANULAT/LIQUIDE**
BEHÄLTER ZUM ENTWÄSSERN EINER MISCHUNG AUS GRANULAT UND FLÜSSIGKEIT
TANK FOR DRAINING A GRANULAR MATERIAL/LIQUID MIXTURE

(30) Priorité: 10.01.2001 LU 90713
(43) Date de publication de la demande: 08.10.2003
(73) Titulaire: PAUL WURTH S.A., 1122 Luxembourg (LU)
(72) Inventeur: KERSCHENMEYER, Guy, L-8381 Kleinbettingen (LU); VAN HOOF, Wolfgang, L-7360 Helmdange (LU); HARTZ, Jean, L-5370 Schuttrange (LU)
(74) Mandataire: Schmitt, Armand
(86) Numéro de dépôt international: PCT/EP2001/015305
(87) Numéro de publication internationale: WO 2002/055177

(56) Documents cités:
- DE-A- 3 211 865
- DE-U- 29 915 075
- GB-A- 1 458 382
- US-A- 2 070 201
- US-A- 3 543 933

## Description

La présente invention concerne un réservoir d'égouttage d'un mélange granulat/liquide.

### État de la technique

Un réservoir d'égouttage d'un granulat est notamment utilisé dans une installation de granulation humide, dans laquelle un produit en fusion est introduit dans un puissant flux d'eau, ce qui entraîne sa solidification, sa granulation et son refroidissement. Cette opération s'effectue généralement de façon discontinue dans un bassin de granulation équipé pour l'injection d'eau de granulation. Une fois un lot de produit en fusion déversé dans le bassin de granulation, et donc granulé, le mélange granulat/eau est pompé depuis le bassin de granulation vers un réservoir d'égouttage afin de séparer le granulat de l'eau de granulation.

Un tel réservoir d'égouttage comprend généralement une partie haute cylindrique et une partie basse conique, qui se termine par une tubulure de sortie équipée d'un organe d'obturation. La partie basse conique est en outre munie, en amont de l'organe d'obturation, d'un dispositif de séparation de l'eau et du granulat, qui comprend une chambre de collecte annulaire pour le liquide égoutté et des surfaces filtrantes séparant l'intérieur du réservoir de la chambre de collecte annulaire. La partie haute est équipée d'un couvercle, fixé à distance des bords supérieurs de la partie haute, de façon à définir une fente de débordement périphérique. Cette dernière représente un moyen d'évacuation de liquide en excès, qui permet l'évacuation de l'eau de granulation en excès. Une rigole est agencée autour du réservoir d'égouttage afin de collecter l'eau de granulation ayant débordé. Le mélange granulat/eau est amené dans le réservoir au moyen d'une conduite de remplissage traversant le couvercle. Lors du remplissage du réservoir, le granulat est retenu par les surfaces filtrantes, alors que l'eau est récupérée dans la chambre de collecte. L'eau en excès, ou trop-plein, peut s'écouler à travers le moyen d'évacuation de liquide en excès.

Un désavantage d'un tel réservoir d'égouttage est que, suivant la façon dont le granulat se répartit dans le réservoir, il arrive qu'il se forme des courants d'eau avec des vitesses plus élevées. Ces courants d'eau aux vitesses plus élevées provoquent des débordement plus importants à certains endroits de la périphérie du réservoir, entraînant avec eux des quantités assez importantes de granulat. Le débordement de l'eau en excès ne se fait donc pas de manière uniforme sur toute la périphérie du réservoir d'égouttage. De plus, il arrive que le réservoir d'égouttage soit légèrement incliné, ce qui accentue davantage ce problème de débordement non uniforme.

### Problème à résoudre par l'invention

Un problème à la base de la présente invention est de proposer un réservoir d'égouttage d'un mélange granulat/liquide qui assure une évacuation de l'excès de liquide plus uniforme lors du remplissage du réservoir d'égouttage. Conformément à l'invention, cet objectif est atteint par un réservoir d'égouttage selon la revendication 1.

### Résumé de l'invention

Un réservoir d'égouttage d'un mélange granulat/liquide selon l'invention comprend une partie basse et une partie haute munie d'un couvercle. Un dispositif de séparation du liquide et du granulat est agencé dans la partie basse. Un dispositif d'évacuation de liquide en excès est agencé dans la partie haute. Selon un aspect important de l'invention, le dispositif d'évacuation de liquide en excès comprend un certain nombre de manchons de débordement traversant le couvercle. On appréciera que les manchons de débordement ont, au-dessus du couvercle, un bord de débordement à hauteur ajustable. Le couvercle équipé de ses manchons de débordement constitue donc un moyen d'évacuation de l'eau en excès ajustable. Cette possibilité d'ajustement individuel de la hauteur du bord de débordement de chaque manchon permet de régler les manchons de sorte à obtenir un débordement de liquide essentiellement équivalent à travers chacun d'eux, assurant ainsi un débordement uniforme. En général, pour obtenir un débordement uniforme, on ajustera préférentiellement les bords de débordement des manchons de sorte qu'ils se trouvent dans un même plan horizontal. On notera en outre que les manchons de débordement permettent de compenser une inclinaison du réservoir. Un réservoir d'égouttage selon l'invention est particulièrement bien adapté à l'égouttage d'un mélange granulat/eau pompé d'un bassin de granulation.

Selon un mode de réalisation préféré, un manchon de débordement comprend un tuyau vertical soudé avantageusement de façon étanche dans le couvercle et muni d'une extrémité supérieure filetée, au-dessus du couvercle. Un anneau d'ajustage fileté est vissé sur l'extrémité supérieure filetée du tuyau vertical. Cet anneau d'ajustage fileté forme le bord de débordement, et peut donc être ajusté selon un axe vertical, afin de régler la hauteur de débordement.

Les manchons de débordement sont avantageusement répartis de façon uniforme dans le couvercle. Le débordement du liquide en excès se fait donc à divers endroits de la section du réservoir, et non pas uniquement à sa périphérie. Cela permet d'avoir des vitesses de liquide essentiellement égales à l'intérieur du réservoir d'égouttage, sur toute sa section. Les vitesses de débordement seront alors généralement plus faibles, ce qui permet un meilleur dépôt du granulat et évite l'entraînement de particules. Une telle répartition des manchons contribue à un débordement uniforme de l'excès de liquide. Afin d'obtenir des vitesses de liquide essentiellement équivalentes sur toute la section du réservoir, on peut par exemple répartir les manchons de sorte qu'ils soient affectés à l'évacuation de liquide de zones du couvercle ayant des surfaces identiques.

Un paramètre dont dépend le débordement est la longueur totale des bords de débordement offerte par les manchons. Afin de garantir une évacuation convenable du liquide, on veillera de préférence à disposer d'une longueur de débordement totale au moins égale à celle d'un réservoir conventionnel à fente périphérique. Cette condition implique que le nombre de manchons dans le couvercle est de préférence tel que la somme des longueurs des bords de débordement des manchons ne soit pas inférieure au périmètre extérieur du réservoir d'égouttage.

Le couvercle a avantageusement une forme essentiellement convexe, par ex. conique, de telle sorte que le liquide ayant débordé à travers les manchons de débordement s'écoule vers la périphérie du couvercle. Le liquide ayant débordé peut être récupéré par une rigole de collecte de liquide entourant le couvercle.

Le dispositif de séparation du liquide et du granulat comprend de préférence une chambre de collecte annulaire pour le liquide égoutté et des surfaces filtrantes séparant l'intérieur du réservoir d'égouttage de la chambre de collecte annulaire. En général, la partie basse se termine par une tubulure de sortie dans laquelle est monté un organe d'obturation. Pendant le remplissage du réservoir, l'organe d'obturation est fermé. Le granulat est retenu par les surfaces filtrantes et se dépose dans le réservoir alors que le liquide s'écoule à travers les surfaces filtrantes et est évacué par la chambre de collecte. Le liquide en excès s'écoule par les manchons de débordement. Une fois que l'eau s'est écoulée hors du réservoir, l'organe d'obturation est ouvert et le granulat égoutté est récupéré, par exemple sur une bande transporteuse défilant sous la tubulure de sortie ou dans une benne.

Une fois que le liquide s'est écoulé hors du réservoir, il reste tout de même une certaine quantité d'eau dans la tubulure de sortie, juste au-dessus de l'organe d'obturation. Afin d'éliminer cette eau résiduelle avant l'ouverture de l'organe d'obturation, la tubulure de sortie est avantageusement munie, juste avant l'organe d'obturation, d'un dispositif de séparation secondaire. Il comprend des surface filtrantes séparant l'intérieur de la tubulure de sortie d'une chambre de collecte annulaire secondaire. L'eau résiduelle de la tubulure de sortie peut donc être évacuée par ce dispositif de séparation secondaire.

Le mélange granulat/liquide est de préférence amené dans le réservoir d'égouttage au moyen d'une conduite de remplissage traversant le couvercle de façon coaxiale à un axe central vertical du réservoir d'égouttage.

Avantageusement, un déflecteur formant une surface d'impact est installé en dessous d'une embouchure de la conduite de remplissage, de sorte que le mélange granulat/liquide sortant de la conduite de remplissage rencontre la surface d'impact du déflecteur. La surface d'impact du déflecteur peut être par exemple essentiellement plane ou conique. Les particules du granulat sont donc freinées en rencontrant la surface d'impact du déflecteur et l'on évite ainsi que les plus fines d'entre elles ne soient entraînées par des courants de liquide ascendants. Afin d'améliorer davantage l'écoulement du mélange eau/granulat dans le réservoir, ce dernier est avantageusement muni d'une chambre de remplissage s'étendant verticalement depuis le couvercle et ouverte vers le bas. La chambre de remplissage entoure l'embouchure de la conduite de remplissage et le déflecteur. La section transversale de la chambre de remplissage est telle qu'il existe un passage entre celle-ci et le déflecteur pour la sortie du mélange. Une telle structure permet de limiter les turbulences dans le réservoir d'égouttage lors de son remplissage, et contribue à un débordement uniforme du liquide en excès. Toujours afin de limiter les turbulences dans le réservoir d'égouttage, le réservoir d'égouttage comprend avantageusement une chambre de guidage s'étendant verticalement depuis le couvercle et ouverte vers le bas. La chambre de guidage entoure la chambre de remplissage et a une section transversale supérieure à celle de la chambre de remplissage.

Les manchons de débordement peuvent être munis de filtres de rétention, afin de retenir des particules qui arriveraient jusqu'aux manchons.

### Description à l'aide des Figures

D'autres particularités et caractéristiques de l'invention ressortiront de la description détaillée d'un mode de réalisation avantageux présenté ci-dessous, à titre d'illustration, en se référant aux dessins annexés. Ceux-ci montrent:
- Fig.1:: une vue de face d'un mode de réalisation préféré d'un réservoir d'égouttage selon l'invention, la partie au-dessus de la ligne mixte brisée étant montrée en coupe;
- Fig.2:: une vue agrandie du détail A de la Fig.1 ;
- Fig.3:: une vue de dessus du réservoir de la Fig.1, sans la conduite de remplissage; et
- Fig.4:: une vue en coupe verticale d'une tubulure de sortie équipée d'un dispositif de séparation secondaire.

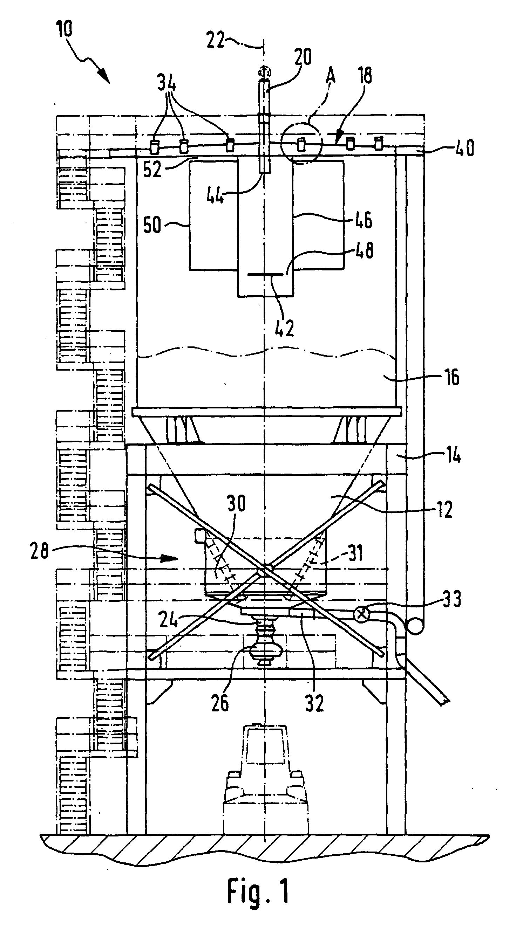

Sur la Fig.1 est illustré un mode de réalisation préféré d'un réservoir d'égouttage 10 en accord avec l'invention. Le réservoir d'égouttage 10 comprend une partie basse 12 de forme conique, supportée dans une armature 14, et une partie haute 16 cylindrique surmontant la partie basse 12. La partie haute 16 est munie d'un couvercle 18 recouvrant le haut du réservoir d'égouttage 10. Le couvercle 18 est traversé par une conduite de remplissage 20 servant à remplir le réservoir d'égouttage 10 d'un mélange granulat/liquide à égoutter. Cette conduite de remplissage 20 traverse le couvercle 18 de façon coaxiale à un axe central vertical 22 du réservoir d'égouttage 10. La partie basse 12 se termine par une tubulure de sortie 24 munie d'un organe d'obturation 26. Dans la partie basse 12, en amont de la tubulure de sortie 24, est agencé un dispositif de séparation du liquide et du granulat, généralement indiqué 28. Le dispositif de séparation 28 comprend une chambre de collecte annulaire 30 pour le liquide égoutté et des surfaces filtrantes 31 (montrées par transparence sur la Fig.1) séparant l'intérieur du réservoir d'égouttage 10 de la chambre de collecte annulaire 30. Le signe de référence 32 indique une conduite d'évacuation pour la sortie du liquide égoutté hors de la chambre de collecte annulaire 30. Une vanne 33 est de préférence montée dans cette conduite d'évacuation 32.

On appréciera que le couvercle 18 est traversé par un certain nombre de manchons de débordement 34 qui ont, au-dessus du couvercle 18, un bord de débordement à hauteur ajustable. Ces manchons de débordement 34 représentent un dispositif d'évacuation de liquide en excès, à hauteur de débordement ajustable. En effet, ils permettent l'évacuation du liquide en excès lors du remplissage du réservoir d'égouttage 10. Typiquement, lors du remplissage du réservoir d'égouttage 10, l'organe d'obturation 26 est fermé et le réservoir 10 se remplit du mélange granulat/liquide amené par la conduite de remplissage 20. Le granulat est retenu par les surfaces filtrantes 31 et s'accumule dans le réservoir 10 alors que le liquide s'écoule à travers les surfaces filtrantes 31 pour être ensuite évacué par la chambre de collecte 30. Lorsque le réservoir 10 est rempli de mélange jusqu'à hauteur du couvercle 18, et que le remplissage du réservoir 10 continue, le liquide en excès s'écoule par les manchons de débordement 34. On notera que, lors du remplissage du réservoir 10, la vanne 33 est avantageusement maintenue fermée jusqu'à ce que le niveau de granulat dans la partie basse 12 du réservoir 10 soit au-dessus des surfaces filtrantes 31. Une fois ce niveau de granulat atteint, la vanne 33 est ouverte et le liquide est filtré à travers le granulat déposé puis à travers les surfaces filtrantes 31 avant de passer dans la chambre de collecte annulaire 30. En procédant ainsi, on utilise le granulat comme moyen de filtrage supplémentaire, et le filtrage du liquide est plus efficace dans le réservoir 10.

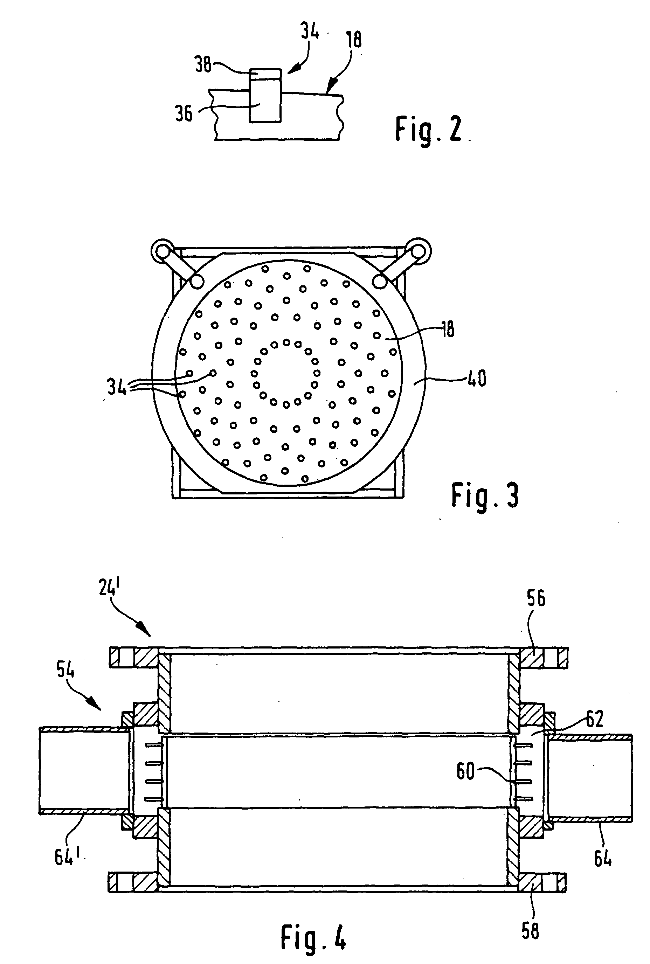

Comme on le voit mieux sur la Fig.2, un manchon de débordement 34 comprend un tuyau vertical 36 qui est soudé de façon étanche dans le couvercle 18 et qui présente une extrémité supérieure filetée au-dessus du couvercle 18. Sur cette extrémité supérieure filetée est vissé un anneau d'ajustage fileté 38, lequel forme le bord de débordement du manchon de débordement 34. Les manchons de débordement 34 sont donc ajustables individuellement. Pour garantir un débordement uniforme du liquide en excès à travers tous les manchons de débordement 34, on règle généralement leurs bords de débordement de sorte qu'ils se trouvent dans un même plan horizontal. On remarquera que cette possibilité d'ajustage individuel permet notamment de compenser une inclinaison éventuelle du réservoir d'égouttage 10. De plus, les manchons de débordement 34 sont de préférence répartis uniformément dans le couvercle 18, comme montré sur la Fig.3, de sorte qu'ils soient affectés à l'évacuation de liquide de zones du couvercle 18 ayant des surfaces identiques. Cela permet d'avoir des vitesses de liquide essentiellement égales sur toute la section du réservoir 10. On notera aussi que, dans ce mode de réalisation préféré, on souhaite que la longueur de débordement offerte par les manchons 34 ne soit pas inférieure à la longueur de débordement offerte par un réservoir d'égouttage traditionnel à fente périphérique, c'est-à-dire son périmètre. Par exemple, si on note Dm le diamètre de chaque manchon 34, Dr le diamètre du réservoir 10, et Xm le nombre de manchons 34, la condition précitée se traduit par Xm*(Dm*π) ≥ (Dr*π). Le nombre de manchons Xm doit donc être de préférence supérieur au rapport Dr/Dm.

Sur la Fig.1, on notera que le couvercle 18 a une forme conique, de sorte que le liquide ayant débordé par les manchons 34 s'écoule vers la périphérie du couvercle 18. Un rigole de collecte, indiquée par le signe de référence 40 sur les Fig.1 et 3, entoure le couvercle 18 afin de récupérer le liquide s'écoulant sur le couvercle 18.

Sur la Fig.1, le signe de référence 42 indique un déflecteur en forme de disque, fixé sous l'embouchure 44 de la conduite de remplissage 20. Ce déflecteur 42 est centré par rapport à l'axe central 22 du réservoir 10 et forme une surface d'impact sensiblement horizontale. On remarquera que l'embouchure 44 de la conduite de remplissage 20 et le déflecteur 42 se trouvent à l'intérieur d'une chambre de remplissage cylindrique 46 qui s'étend verticalement depuis le couvercle 18 et qui est ouverte vers le bas. Le déflecteur 42 est fixé aux parois de la chambre de remplissage 46. La section de la chambre de remplissage 46 est telle qu'il existe un espace annulaire 48 entre le déflecteur 42 et la chambre de remplissage 46 pour le passage du mélange. Le mélange amené par la conduite de remplissage 20 pénètre donc tout d'abord dans la chambre 46 et rencontre la surface d'impact, sur laquelle il est freiné, puis sort de la chambre 46 par l'espace annulaire 48. L'utilisation du déflecteur 42 à l'entrée du réservoir 10, complété par la chambre 46, permet de limiter les turbulences à l'intérieur du réservoir 10.

Pour limiter encore davantage les turbulences à l'intérieur du réservoir 10, une chambre de guidage 50 cylindrique est prévue, laquelle s'étend verticalement et est ouverte vers le bas. La chambre de guidage 50 entoure la chambre de remplissage 46 et est fixée à distance du couvercle 18, de sorte qu'il existe en haut de la chambre de guidage 50 une fente annulaire 52 pour le passage du liquide. La section de la chambre de guidage 50 est supérieure à celle de la chambre de remplissage 46.

Une fois que le remplissage est terminé et que liquide s'est écoulé hors du réservoir 10 par le dispositif de séparation 28, il reste en général du liquide dans la tubulure de sortie 24 entre le bas du dispositif de séparation 28 et l'organe d'obturation 26. Si ce liquide résiduel n'est pas évacué, il sort avec le granulat égoutté lorsqu'on ouvre l'organe d'obturation 26. Afin de remédier à ce problème, on peut monter un dispositif de séparation secondaire au niveau de la tubulure de sortie 24. Cela est illustré sur la Fig.4, où une tubulure de sortie 24', similaire à celle de la Fig.1, est équipée d'un dispositif de séparation secondaire généralement indiqué 54. La tubulure de sortie 24' est munie d'une bride supérieure 56 pour son raccordement au dispositif de séparation 28 et d'une bride inférieure 58 pour le raccordement de l'organe d'obturation 26. Le dispositif de séparation secondaire 54 comprend des surfaces filtrantes 60 essentiellement annulaires, qui séparent l'intérieur de la tubulure de sortie 24' d'une chambre de collecte annulaire secondaire 62. Le liquide qui se trouve dans la tubulure de sortie 24' peut donc s'écouler à travers les surfaces filtrantes 60 et le granulat est retenu à l'intérieur de la tubulure 24'. Les signes de référence 64 et 64' indiquent deux conduites d'évacuation secondaires pour la sortie du liquide hors de la chambre de collecte secondaire. Les conduites d'évacuation secondaires 64 et 64' sont avantageusement munies chacune d'une vanne secondaire (non montrée), qui seront de préférence opérées comme la vanne 33 du dispositif de séparation 28.

## Revendications

1. Réservoir d'égouttage d'un mélange granulat/liquide comprenant:
une partie basse (12) et une partie haute (16) munie d'un couvercle (18) ;
un dispositif de séparation (28) du liquide et du granulat agencé dans ladite partie basse (12) ;
un dispositif d'évacuation de liquide en excès agencé dans ladite partie haute (16);
**caractérisé en ce que**
ledit dispositif d'évacuation de liquide en excès comprend un certain nombre de manchons de débordement (34) traversant ledit couvercle (18), lesdits manchons de débordement (34) ayant au-dessus dudit couvercle (18) un bord de débordement à hauteur ajustable.

2. Réservoir d'égouttage selon la revendication 1, **caractérisé en ce qu'**un tel manchon de débordement (34) comprend :
un tuyau vertical (36) soudé dans ledit couvercle (18), ledit tuyau vertical (36) ayant une extrémité supérieure filetée au-dessus dudit couvercle ; et
un anneau d'ajustage fileté (38) qui est vissé sur ladite extrémité supérieure filetée dudit tuyau vertical (36), ledit anneau d'ajustage fileté (38) formant ledit bord de débordement.

3. Réservoir d'égouttage selon la revendication 1 ou 2, **caractérisé en ce que** lesdits manchons de débordement (34) sont répartis uniformément dans ledit couvercle (18).

4. Réservoir d'égouttage selon l'une quelconque des revendications précédentes, **caractérisé en ce que** le nombre de manchons (34) équipant le couvercle (18) est choisi de telle sorte que la somme des longueurs des bords de débordement des manchons (34) ne soit pas inférieure au périmètre de la partie haute (12) du réservoir d'égouttage (10).

5. Réservoir d'égouttage selon l'une quelconque des revendications précédentes, **caractérisé en ce que** ledit couvercle (18) a une forme essentiellement convexe de telle sorte que le liquide ayant débordé à travers lesdits manchons de débordement (34) s'écoule vers la périphérie dudit couvercle (18).

6. Réservoir d'égouttage selon l'une quelconque des revendications précédentes, **caractérisé par** une rigole de collecte (40) de liquide entourant ledit couvercle (18).

7. Réservoir d'égouttage selon l'une quelconque des revendications précédentes, **caractérisé en ce que** ledit dispositif de séparation (28) du liquide et du granulat comprend une chambre de collecte annulaire (30) pour le liquide égoutté et des surfaces filtrantes (31) séparant l'intérieur dudit réservoir d'égouttage (10) de ladite chambre de collecte annulaire (30).

8. Réservoir d'égouttage selon l'une quelconque des revendications précédentes, **caractérisé par** une tubulure de sortie (24') terminant ladite partie inférieure (12) dudit réservoir d'égouttage (10), dans laquelle est montée un organe d'obturation (26) ; et par un dispositif de séparation secondaire (54), monté dans ladite tubulure de sortie (24') en amont dudit organe d'obturation (26), ledit dispositif de séparation secondaire (54) comprenant des surface filtrantes (60) séparant l'intérieur de la tubulure de sortie (24') d'une chambre de collecte annulaire secondaire (62).

9. Réservoir d'égouttage selon l'une quelconque des revendications précédentes, **caractérisé par** une conduite de remplissage (20) dudit réservoir d'égouttage (10) qui traverse ledit couvercle (18) de façon coaxiale à un axe central vertical (22) dudit réservoir d'égouttage (10).

10. Réservoir d'égouttage selon la revendication précédente, **caractérisé par** un déflecteur (42) formant une surface d'impact en dessous d'une embouchure (44) de ladite conduite de remplissage (20), de sorte que le mélange granulat/liquide sortant de ladite conduite de remplissage (20) rencontre ladite surface d'impact dudit déflecteur (42).

11. Réservoir d'égouttage selon la revendication précédente, **caractérisé par** une chambre de remplissage (46) s'étendant verticalement depuis ledit couvercle (18) et ouverte vers le bas, ladite chambre de remplissage (46) entourant ladite embouchure (44) de ladite conduite de remplissage (20) et ledit déflecteur (42), et la section transversale de ladite chambre de remplissage (46) étant telle qu'il existe un espace entre celle-ci et ledit déflecteur (42).

12. Réservoir d'égouttage selon la revendication précédente, **caractérisé par** une chambre de guidage (50) s'étendant verticalement depuis ledit couvercle (18) et ouverte vers le bas, ladite chambre de guidage (50) entourant ladite chambre de remplissage (46) et ayant une section transversale supérieure à celle de ladite chambre de remplissage (46).

13. Réservoir d'égouttage selon l'une quelconque des revendications précédentes, **caractérisé par** un filtre de rétention dans les manchons de débordement (34).

14. Utilisation du réservoir d'égouttage (10) selon l'une quelconque des revendications précédentes pour l'égouttage d'un lot de mélange granulat/eau pompé depuis un bassin de granulation vers ledit réservoir d'égouttage (10).

## Patentansprüche

1. Abtropfbehälter für ein Granulat/Flüssigkeitsgemisch, der umfasst:
einen unteren Teil (12) und einen oberen Teil (16), der mit einem Deckel (18) versehen ist,
eine Vorrichtung (28) zur Trennung von Flüssigkeit und Granulat, die im unteren Teil (12) angebracht ist,
eine Vorrichtung zur Entleerung der überschüssigen Flüssigkeit, die im oberen Teil (16) angebracht ist, und
**dadurch gekennzeichnet ist, dass**
die Vorrichtung zur Entleerung der überschüssigen Flüssigkeit eine gewisse Anzahl von Überlaufmuffen (34) umfasst, die den Deckel (18) durchqueren, wobei diese Überlaufmuffen (34) oberhalb des Deckels (18) einen Überlaufrand mit verstellbarer Höhe aufweisen.

2. Abtropfbehälter nach Anspruch 1 **dadurch gekennzeichnet, dass** eine solche Überlaufmuffe (34) umfasst:
ein senkrechtes Rohr (36), das in den Deckel (18) eingeschweißt ist, wobei dieses Rohr (36) ein oberes, mit einem Gewinde versehenes Ende oberhalb des Deckels aufweist und
einen mit einem Gewinde versehenen verstellbaren Ring (38), der auf das obere, mit einem Gewinde versehene Ende des senkrechten Rohrs (36) aufgeschraubt ist und welcher den Überlaufrand bildet.

3. Abtropfbehälter nach Anspruch 1 oder 2 **dadurch gekennzeichnet, dass** diese Überlaufmuffen (34) in dem Deckel (18) gleichmäßig verteilt sind.

4. Abtropfbehälter nach irgendeinem der vorstehenden Ansprüche **dadurch gekennzeichnet, dass** die Anzahl der Muffen (34), mit denen der Deckel (18) ausgestattet ist, derart gewählt ist, dass die Summe der Längen der Überlaufränder der Muffen (34) nicht kleiner als der Umfang des oberen Teils (12) des Abtropfbehälters (10) ist.

5. Abtropfbehälter nach irgendeinem der vorstehenden Ansprüche **dadurch gekennzeichnet, dass** der Deckel (18) eine im Wesentlichen konvexe Form aufweist, so dass die durch die Überlaufmuffen (34) übergelaufene Flüssigkeit zum Rand des Deckels (18) hin abfließt.

6. Abtropfbehälter nach irgendeinem der vorstehenden Ansprüche, der durch eine Flüssigkeitsauffangrinne (40) gekennzeichnet ist, die den Deckel (18) umgibt.

7. Abtropfbehälter nach irgendeinem der vorstehenden Ansprüche **dadurch gekennzeichnet, dass** die Vorrichtung (28) zur Trennung von Flüssigkeit und Granulat eine ringförmige Auffangkammer (30) für die abgetropfte Flüssigkeit und Filteroberflächen (31), die das Innere des Abtropfbehälters (10) von der ringförmigen Auffangkammer (30) trennen, umfasst.

8. Abtropfbehälter nach irgendeinem der vorstehenden Ansprüche, **gekennzeichnet durch** einen Ablaufstutzen (24'), der den unteren Teil (12) des Abtropfbehälters (10), in dem ein Verschlussorgan (26) eingebaut ist, abschließt, und **durch** eine zweite Trennvorrichtung (54), die in dem Ablaufstutzen (24') oberhalb des Verschlussorgans (26) eingebaut ist und Filteroberflächen (60) aufweist, die das Innere des Ablaufstutzens (24') von einer zweiten ringförmigen Auffangkammer (62) trennen.

9. Abtropfbehälter nach irgendeinem der vorstehenden Ansprüche, der durch eine Füllleitung (20) des Abtropfbehälters (10) gekennzeichnet ist, die den Deckel (18) derart durchquert, dass ihre Achse koaxial zu einer zentralen senkrechten Achse (22) des Abtropfbehälters (10) verläuft.

10. Abtropfbehälter nach irgendeinem der vorstehenden Ansprüche, der durch einen Abweiser (42) gekennzeichnet ist, der eine Auftreffoberfläche unterhalb einer Mündung (44) der Füllleitung (20) bildet, so dass das aus der Füllleitung (20) fließende Granulat/Flüssigkeitsgemisch auf die Auftreffoberfläche des Abweisers (42) auftrifft.

11. Abtropfbehälter nach irgendeinem der vorstehenden Ansprüche, der durch eine Füllkammer (46) gekennzeichnet ist, die sich senkrecht vom Deckel (18) ausdehnt, nach unten offen ist und die Mündung (44) der Füllleitung (20) und den Abweiser (42) umgibt, wobei der Querschnitt der Füllkammer (46) derart gestaltet ist, dass zwischen Letzterer und dem Abweiser (42) ein Zwischenraum besteht.

12. Abtropfbehälter nach irgendeinem der vorstehenden Ansprüche, der durch eine Führungskammer (50) gekennzeichnet ist, die sich senkrecht vom Deckel (18) ausdehnt, nach unten offen ist und die Füllkammer (46) umgibt und einen Querschnitt aufweist, der größer als derjenige der Füllkammer (46) ist.

13. Abtropfbehälter nach irgendeinem der vorstehenden Ansprüche, der durch einen Rückhaltefilter in den Überlaufmuffen (34) gekennzeichnet ist.

14. Benutzung des Abtropfbehälters (10) nach irgendeinem der vorstehenden Ansprüche zum Abtropfen einer Menge eines GranulatlWassergemischs, das von einem Granulationsbecken in den Abtropfbehälter (10) gepumpt worden ist.

## Claims

1. A tank for draining a granular material/liquid mixture comprising:
a lower part (12) and an upper part (16) fitted with a lid (18);
a device (28) for separating the liquid and the granular material and arranged in said lower part (12);
a device for removing excess liquid and arranged in said upper part (16);
**characterized in that**
said device for removing excess liquid comprises a certain number of overflow sleeves (34) passing through said lid (18), said overflow sleeves (34) having, above the level of said lid (18), an overflow edge that is adjustable in height.

2. The drainage tank as claimed in ciaim 1, **characterized in that** such an overflow sleeve (34) comprises:
a vertical pipe (36) welded into said lid (18), said vertical pipe (36) having a threaded upper end above the level of said lid; and
a threaded adjustment ring (38) which is screwed onto said threaded upper end of said vertical pipe (36), said threaded adjustment ring (38) forming said overflow edge.

3. The drainage tank as claimed in claim 1 or 2, **characterized in that** said overflow sleeves (34) are distributed uniformly over said lid (18).

4. The drainage tank as claimed in any one of the preceding claims, **characterized in that** the number of sleeves (34) with which the lid (18) is equipped is chosen so that the sum of the lengths of the overflow edges of the sleeves (34) is no shorter than the perimeter of the upper part (12) of the drainage tank (10).

5. The drainage tank as claimed in any one of the preceding claims, **characterized in that** said lid (18) has an essentially convex shape so that the liquid which has overflowed through said overflow sleeves (34) runs toward the periphery of said lid (18).

6. The drainage tank as claimed in any one of the preceding claims, **characterized by** a liquid-collecting channel (40) running around said lid (18).

7. The drainage tank as claimed in any one of the preceding claims, **characterized in that** said device (28) for separating the liquid and the granular material comprises an annular collection chamber (30) for the drained-off liquid and filtering surfaces (31) separating the inside of said drainage tank (10) from said annular collection chamber (30).

8. The drainage tank as claimed in any one of the preceding claims, **characterized by** an outlet portion (24') ending said lower part (12) of said drainage tank (10), in which a shut-off member (26) is mounted; and by a secondary separating device (54) mounted in said outlet portion (24') upstream of said shut-off member (26), said secondary separating device (54) comprising filtering surfaces (60) separating the inside of the outlet portion (24') from a secondary annular collection chamber (62).

9. The drainage tank as claimed in any one of the preceding claims, **characterized by** a filling line (20) of said drainage tank (10), which passes through said lid (18) in such a way as to be coaxial with a vertical central axis (22) of said drainage tank (10).

10. The drainage tank as claimed in the preceding claim, **characterized by** a deflector (42) forming an impact surface below a mouth (44) of said filling line (20), so that the granular material/liquid mixture leaving said filling line (20) strikes said impact surface of said deflector (42).

11. The drainage tank as claimed in the preceding claim, **characterized by** a filling chamber (46) stretching vertically from said lid (18) and open toward the bottom, said filling chamber (46) surrounding said mouth (44) of said filling line (20) and said deflector (42), and the cross section of said filling chamber (46) being such that there is a space between this chamber and said deflector (42).

12. The drainage tank as claimed in the preceding claim, **characterized by** a guide chamber (50) stretching vertically from said lid (18) and open toward the bottom, said guide chamber (50) surrounding said filling chamber (46) and having a larger cross section than said filling chamber (46).

13. The drainage tank as claimed in any one of the preceding claims, **characterized by** a retention filter in the overflow sleeves (34).

14. The use of the drainage tank (10) as claimed in any one of the preceding claims for draining a batch of granular material/water mixture pumped from a granulating tank to said drainage tank (10).
